# EUROPEAN PATENT APPLICATION

(11) **EP 4 478 283 A1**
(43) Date of publication of application: **18.12.2024**
(21) Application number: 23179049.4
(22) Date of filing: 13.06.2023
(51) Int. Cl.: G06T 7/00, G06T 7/12, A61B 5/00

(54) **METHOD AND SYSTEM FOR DETECTION OF DENTAL PLAQUE**

(71) Applicant: 3Shape A/S, 1060 Copenhagen K (DK)
(72) Inventor: ALEMÃ0, João, 1060 Copenhagen K (DK); VANNAHME, Christoph, 1060 Copenhagen K (DK); ALALOUF, Daniella, 1060 Copenhagen K (DK); MICHOU, Stavroula, 1060 Copenhagen K (DK); WESTERGAARD, Philip Grabow, 1060 Copenhagen K (DK)
(74) Representative: Guardian IP Consulting I/S

(57) **Abstract**

According to an embodiment a computer-implemented method for detecting dental plaque on a digital 3D model (101) of a dental situation is disclosed. The method comprises receiving, by a processor, the digital 3D model (101) of the dental situation, providing at least a part of the digital 3D model (101) as an input (601) to a trained neural network (600), wherein the at least part of the digital 3D model (101) comprises natural color information and/or geometric information associated with at least one tooth surface of the dental situation. The geometric information comprises a curvature information, a facet normal information, a depth information relating to a virtual camera position and/or an angle between a facet normal and a virtual camera direction. Further, the method comprises obtaining an output (605) from the trained neural network (600) based on the provided input (610), wherein the output (605) comprises a dental plaque parameter associated with the at least one tooth surface, assigning the dental plaque parameter to the at least part of the digital 3D model (101) and displaying the digital 3D model (101) with the dental plaque parameter assigned to the at least part of the digital 3D model (101).

## Description

### Technical field

The disclosure relates to a computer-implemented method and system for detecting dental plaque in a digital 3D dental model of a patient's dentition.

### Background

Dental plaque, or hereby referred to as plaque, is a dental condition manifesting in the form of a biofilm that forms on human teeth. Plaque biofilm is a sticky, acidic biofilm, made of broken-down food by bacteria present in the mouth. Plaque may be removed through regular dental cleanings, daily brushing and flossing. However, if left untreated, it can cause formation of caries, tartar, gingivitis, or other oral diseases. Therefore, timely detection and monitoring of plaque by dental practitioners are essential for preserving tooth structure and overall oral health of a patient.

Currently, clinical detection and diagnosis of plaque is based on direct visual-tactile inspections of teeth by dental practitioners. A disclosing agent, for example in form of a tablet, can be used to stain the plaque in a bright color, typically red or blue. Certain disclosing agents contain several dyes which may stain plaque of different age in a different color. For example, new plaque may be stained in red color and old, pathological plaque in blue color.

Development of intraoral scanning techniques has been instrumental in the transition to modern digital dentistry. Use of intraoral 3D scanner allows the dental practitioners to accurately and quickly capture intraoral situation of the patient which may then be visualized on a display as a digital 3D dental model. Obtained digital 3D dental model of patient's teeth may thus serve as a digital impression, offering numerous advantages over a classical physical impression. Overall efficiency of dental procedures is thereby improved as, for example, the created digital impressions can be used in a range of applications such as design of dental restorations or design of orthodontic treatments. The digital 3D dental model may in addition, be used for diagnostic purposes to detect and visualize to the user, for example a dental practitioner, presence of a dental condition such as plaque, but also caries, gingivitis, gingival recession and/or tooth wear.

There is a clear need to develop methods and systems which will enable plaque detection in the dental situation from a single digital 3D dental model of the dental situation. Dental practitioners are also in need of a solution to visualize the plaque on the digital 3D dental model to the patient in a manner which may resemble use of disclosing agent. This, in turn, would allow for designing timely dental hygiene improvement recommendations to preserve oral health of the patient.

Beyond just presence of plaque in the dental situation, there is also a need for digitally determining plaque thickness, as well as type of plaque present, for example whether the plaque present is new and less harmful or old, pathogenic plaque. Identification and visualization of areas with high-risk pathogenic plaque is especially desired.

### Summary

In an embodiment a computer-implemented method for detecting dental plaque on a digital 3D model of a dental situation is disclosed, where the method comprises:
- receiving, by a processor, the digital 3D model of the dental situation,
- providing at least a part of the digital 3D model as an input to a trained neural network, wherein the at least part of the digital 3D model comprises natural color information and/or geometric information associated with at least one tooth surface of the dental situation,
- obtaining an output from the trained neural network based on the provided input, wherein the output comprises a dental plaque parameter associated with the at least one tooth surface,
- assigning the dental plaque parameter to the at least part of the digital 3D model, and
- displaying the digital 3D model with the dental plaque parameter assigned to the at least part of the digital 3D model.

In an embodiment the computer-implemented method for detecting dental plaque on the digital 3D model of the dental situation comprises:
- receiving, by the processor, the digital 3D model of the dental situation,
- providing the at least part of the digital 3D model as the input to the trained neural network, wherein the at least part of the digital 3D model comprises natural color information and/or geometric information associated with the at least one tooth surface of the dental situation, wherein the geometric information comprises a curvature information, a facet normal information, a depth information relating to a virtual camera position and/or an angle between a facet normal and a virtual camera direction,
- obtaining the output from the trained neural network based on the provided input, wherein the output comprises the dental plaque parameter associated with the at least one tooth surface,
- assigning the dental plaque parameter to the at least part of the digital 3D model,
- displaying the digital 3D model with the dental plaque parameter assigned to the at least part of the digital 3D model.

Expression "3D" throughout the present disclosure refers to a term "three-dimensional". Similarly, term "2D" refers to a term "two-dimensional". Term "digital 3D model of a dental situation" refers to a digital, three-dimensional, computer-generated representation of the patient's dental situation.

Such digital 3D model may accurately correspond to the actual dental situation such that dental objects like teeth, teeth surfaces, restorations, and gingiva on the digital 3D model correspond to those of the dental situation.

The digital 3D model may be constructed by the processor, based on scan data collected in an intraoral scanning process in which an intraoral scanner may be used to scan the patient's dental situation comprising teeth and gingiva. The digital 3D model can be stored in a memory of a computer system, for example in a Standard Triangle Language (STL) format.

The digital 3D model can be received or accessed by the processor. The digital 3D model may usually be displayed on a display screen in form of a 3D mesh, representing surfaces of teeth and gingival tissue of the dental situation. The 3D mesh may be comprised of individual facets, for example triangular facets. Alternatively, the digital 3D model may be displayed as a point cloud comprising points, a graph comprising nodes and edges, a volumetric representation comprising voxels, or any other suitable 3D representation form.

The method may comprise providing the at least part of the digital 3D model as the input to the trained neural network. The at least part of the digital 3D model may correspond to the at least one tooth surface, or a part of the at least one tooth surface of the dental situation. The trained neural network may be suitable for processing the at least part of the digital 3D model directly in its three-dimensional format or may be suitable for processing a two-dimensional representation of the at least part of the digital 3D model, such as a 2D image or a plurality of 2D images which may be generated by taking snapshots of the digital 3D model or could be 2D images generated by the intraoral scanner. The 2D images generated by the scanner may comprise white light images, fluorescence images and/or infrared images.

Three-dimensional or two-dimensional data structures which serve as input to the trained neural network may first be converted into a numerical representation, before being input to the trained neural network.

In an embodiment, the input to the trained neural network may be in 3D format. An example of the input in 3D format may be the point cloud, the 3D mesh, the volumetric representation or the graph representation of the at least part of the digital 3D model. It may be possible to transform the input from one 3D representation type, for example from the mesh representation, into another 3D representation type, for example the point cloud representation. A type of the trained neural network capable of processing the input in 3D format may be a trained PointNet network, or a PointNet-type network. These neural networks may be capable of processing the digital 3D model, or the at least part of the digital 3D model, in the point cloud form.

Providing the at least part of the digital 3D model as the input may comprise sampling the at least part of the digital 3D model or converting the at least part of the digital 3D model into a numerical form. For example, one or more points from the point cloud or mesh representation of the digital 3D model may be converted into numerical form, for example a matrix of input values describing a certain set of characteristics. The matrix may then form the input for the trained neural network.

If the digital 3D model is in the 3D mesh form, it may be possible to convert the digital 3D model into the point cloud form, by collapsing all vertices from the 3D mesh format so that only points remain, thus forming the point cloud. The remaining point cloud may then be processed directly by the PointNet neural network, or the PointNet-type neural network.

In another embodiment, the input may be in 2D format such as a 2D image or a plurality of 2D images of the at least one tooth surface of the digital 3D model. Alternatively, the input may be in 2D format such as the 2D image or the plurality of 2D images of the at least one tooth surface of the actual dental situation, captured by the intraoral scanner.

The trained neural network may thus be suitable for processing 2D input format. One or more of 2D images may be generated from the digital 3D model by a virtual camera, referred to also as the camera. The virtual camera may take snapshots of the individual teeth of the digital 3D model. For example, a tooth in the digital 3D model may be positioned such that a desired tooth surface of the tooth is facing the camera. Positioning of the tooth may comprise rotation in order to align the virtual camera direction and the target tooth surface. Positioning of the tooth may also comprise translation such that the complete target tooth surface is in a field of view of the virtual camera, for example such that all facets on the tooth surface can be captured. Both rotation and translation may be performed via a local coordinate system of the tooth. This may be an automatic process where predetermined movements of the tooth have been set up in order to capture, via the virtual camera, the one or more of the tooth surfaces. Alternatively, the virtual camera may be moved to a plurality of predetermined positions to capture snapshots of the desired tooth surface. The snapshots of the individual teeth may alternatively be generated by manual movement of the virtual camera to desired positions.

The method according to an embodiment may comprise generating the input for the trained neural network, wherein the input is the one or more 2D images of the at least one tooth surface of the tooth in the digital 3D model, comprising:
- rotating the tooth, using the local coordinate system of the tooth, such that a surface normal of the at least one tooth surface of the tooth coincides with a direction of the virtual camera,
- translating the tooth, using the local coordinate system of the tooth, such that the at least one tooth surface is in the field of view of the virtual camera,
- creating the one or more 2D images by taking snapshots of the at least one tooth surface with the virtual camera.

The surface normal of the at least one tooth surface may coincide with an axis of the local coordinate system of the tooth protruding through a labial tooth surface. The direction of the virtual camera shows where the camera is aimed towards.

The plurality of 2D images of the at least one tooth surface of the digital 3D model, besides being generated by taking snapshots of the digital 3D model by the virtual camera, may be generated directly by the intraoral scanner recording the dental situation.

Providing the at least part of the digital 3D model as the input for the trained neural network may comprise generating the one or more 2D images of the at least one tooth surface.

The at least one tooth surface in the digital 3D model may have a directly corresponding tooth surface in the actual dental situation. Thus, the process of generating the one or more 2D images of the at least one tooth surface of the digital 3D model with the virtual camera may correspond to taking the photographs of the at least one tooth surface in the actual dental situation, for example by using the intraoral scanner. The one or more 2D images generated in this manner may be provided to the trained neural network.

The generated one or more 2D images may form the input for the trained neural network. Alternatively or additionally, the input may be at least one pixel of the one or more 2D images.

In an embodiment, providing the at least part of the digital 3D model as the input for the trained neural network may comprise providing the 3D mesh of the at least part of the digital 3D model to the trained neural network.

In a further embodiment, providing the at least part of the digital 3D model as the input for the trained neural network may comprise providing the point cloud of the at least part of the digital 3D model to the trained neural network.

In yet a further embodiment, providing the at least part of the digital 3D model as the input for the trained neural network may comprise providing the voxel representation of the at least part of the digital 3D model to the trained neural network.

The at least part of the digital 3D model may comprise natural color information and/or geometric information associated with the at least one tooth surface of the dental situation. The tooth surface may be any one of an occlusal, a labial, a buccal, a mesial, a distal a cervical and/or an incisal surface.

Natural color information and/or geometric information may be comprised in the scan data obtained via the intraoral scanner used to scan the dental situation.

Natural color information may relate to surface color of scanned teeth and/or gingiva and may be obtained by scanning the intraoral situation of the patient by means of the intraoral scanner. This information may be expressed through Red-Green-Blue (RGB) color intensity values. The presence of natural color information may be beneficial as it may facilitate identifying plaque due to its different coloring compared to a healthy, clean enamel. The difference in color of tooth surfaces may indicate plaque because dental plaque is more yellow compared to healthy enamel. Thus, the natural color information may be of high relevance for the trained neural network in a process of detecting plaque. The natural color information may, in addition to plaque, be particularly useful to detect stains, dental calculus (also referred to as calcified dental plaque) and/or food debris.

Geometric information, also referred to as topological information, comprised in the at least part of the digital 3D model may be depth information relating to a camera position, an angle between a facet normal and a camera direction, the facet normal and/or curvature information. The term "camera" in this context relates to the virtual camera used to view the digital 3D model. The camera may be characterized by a virtual camera property, for example field of view (FOV) and/or focal length. Geometric information examples mentioned here may serve as descriptors of geometrical properties of the input for the trained neural network.

The depth information may comprise distance information of the at least part of the digital 3D model to the camera. Depth information may be in the form of a depth image. The depth image may display the at least part of the digital 3D model according to its distance from the camera. For example, parts of the digital 3D model more distant to the camera may be shaded darker than the parts closer to the camera. A distance threshold may be defined such that, when a distance between the camera and the part of the digital 3D model is greater than the distance threshold, the part of the digital 3D model is not shown in the depth information. The distance of the at least part of the digital 3D model from a given camera position indirectly describes a topology of the at least part of the digital 3D model, and consequently a smoothness of a surface of the at least part of the digital 3D model. The variations of surface smoothness may represent a relevant parameter in detecting plaque in the at least part of the digital 3D model because plaque has different surface waviness compared to clean tooth surface.

The facet normal may be a vector perpendicular to a facet of the digital 3D model. The facet can be seen as a "building block" of the digital 3D model in 3D mesh format and can, for example, be a triangle if the digital 3D model is in format of a triangular mesh. A triangular facet may be defined by three points (vertices) interconnected with three edges. Two neighboring facets that have a small variation in their respective facet normals may indicate a local area that is smooth. However, a significant variation in the facet normals of neighboring facets, if detected, may be an indication of plaque. The variation in two surface normals can be expressed in terms of an angle between the two surface normals.

The curvature information may be in the form of a per-facet value and may be obtained by measuring a change along facet normals of neighboring facets of the digital 3D model. This change may give insight into whether the associated section of the digital 3D model is flat or curved. Thereby, the curvature information may describe topology of teeth by revealing smooth and non-smooth surfaces . Plaque causes changes at the surface level of teeth which then may be reflected directly in change of the surface curvature. Plaque may also be associated with a localized smoothness (regions of low curvature) in certain areas. The curvature information may thus be a significant parameter in detecting plaque presence, detecting locations of plaque, plaque type and/or plaque severity.

Both the geometric information and the natural color information may be expressed as numerical values per unit element, for example vertex, of the at least part of the digital 3D model. These values, for example values between 0 and 255 in Red, Green, Blue (RGB) color space, may form matrices which may be suitable for processing by the trained neural network.

Optionally, method may further comprise providing semantic information of the at least part of the digital 3D model to the trained neural network. Thus, the input may additionally comprise semantic information of the at least part of the digital 3D model.

Semantic information of the at least part of the digital 3D model may be a tooth identifier, a tooth surface identifier, and/or a jaw identifier. The tooth identifier may provide information on which tooth is comprised in the input (e.g. an incisor, a canine, a molar or a pre-molar) . The tooth surface identifier may provide information on which tooth surface is comprised in the input (e.g. a buccal, lingual, mesial, distal or occlusal surface) while the jaw identifier may provide information to what jaw (upper or lower) the at least part of the digital 3D model relates to.

By incorporating semantic information into the input of the trained neural network, a semantic context may be given to data present in the input, thereby providing semantic context to the trained neural network. The trained neural network may consequently adapt its behavior according to the provided semantic information. Semantic information may be converted to numerical format, as other data formats, before being processed by the trained neural network. Better performance of the trained neural network may be achieved by additionally incorporating this semantic information into the input. For example, pre-molar teeth have a high tendency to comprise plaque. The behavior of the trained neural network may be adapted by having this information incorporated into the input. For example, numerical representation of a tooth serving as the input to the trained neural network may be modified such that it reflects the fact that the tooth is a pre-molar tooth. The exact way of how this numerical modification takes place may be learned by the trained neural network.

It has been found out that advantageously, by inputting natural color information and/or geometric information, associated with the at least one tooth surface of the dental situation, into the trained neural network, it may be possible to detect various plaque parameters on the digital 3D model, such as presence of plaque, type of plaque and/or plaque thickness. Additionally, dental calculus, stains or food debris can be detected due to a distinctive coloration exhibited.

Thereby, the method according to an embodiment may comprise generating the input for the trained neural network from the received digital 3D model. Depending on the type of the trained neural network, the input may be in 3D format or in 2D format. For example, one type of the trained neural network may be capable of processing numerical representations of 2D images generated from the digital 3D model while another type of the trained neural network may be capable of processing numerical representations of the digital 3D model in form of the point cloud or the graph representation. Thus, the received digital 3D model may be adapted for processing by the trained neural network.

Once generated, the input may be provided to the trained neural network in order to obtain the output from the trained neural network. All information forming the input may be concatenated into a final input tensor.

Further, the method may comprise obtaining an output from the trained neural network based on the provided input, wherein the output comprises the dental plaque parameter associated with the at least one tooth surface.

Obtaining the output from the trained neural network based on the provided input may comprise detecting the dental plaque parameter in the provided input.

The output may be in form of a probability value representing the likelihood that the at least part of the digital 3D model comprises the dental plaque parameter. This probability value may relate to at least one vertex, at least one facet, at least one point, at least one node, at least one pixel or at least one voxel comprised in the at least part of the digital 3D model, depending on the format of the provided input. Generally, the output may be a probability of the dental plaque parameter presence per unit element of the input. The unit element may be a vertex, a pixel, a voxel, a node, a point and/or a facet.

By obtaining the output in this manner, information about plaque in the dental situation may be obtained from a single digital 3D model of the dental situation.

Obtaining the output from the trained neural network based on the provided input may comprise detecting the dental plaque parameter in the input which may be associated with the at least one tooth surface of the dental situation.

The method according to the disclosure may comprise assigning the dental plaque parameter to the at least part of the digital 3D model. In this way, the detected dental plaque parameter may be associated with the corresponding region in the digital 3D model and thereby with the corresponding region of the actual dental situation represented by the digital 3D model. Correspondence of the at least part of the digital 3D model and the detected dental plaque parameter may be established by means of an identifier, which may be in form of a number. For example, the dental plaque parameter may be detected for a vertex, a facet, a point, a voxel, a node a pixel or, in general, for any unit element of the input. The exact position of such facet, a point, a voxel, a node and/or a pixel, in the at least part of the digital 3D model may be defined through the identifier. The described assigning step allows for correct marking and display of the dental plaque parameter on the digital 3D model.

The trained neural network may, in a manner described above, perform a classification task per unit element of the input, and thereby classify the input according to plaque presence, for example into tooth surfaces comprising plaque and tooth surfaces without plaque.

The output from the trained neural network may be in a vector format of fixed size which can be derived from a processed representation of the input. Values in the output may comprise at least one probability value representing the likelihood that the input comprises plaque.

According to an embodiment, the trained neural network may be a trained convolutional neural network (CNN). The trained CNN may comprise a plurality of convolutional layers capable of capturing low-level features of the input, i.e. obtaining convolved features.

Moreover, one or more of pooling layers may be present, responsible for reducing the spatial size of convolved features. Convolutional neural networks may be particularly suitable for processing matrix information representing 2D images.

Another example of the trained neural network, particularly suitable for performing general classification tasks, is a trained Residual Network (ResNet) or a variation of it.

Another example of the trained neural network suitable for performing classification tasks per unit element of the input, also referred to as semantic segmentation tasks, is a trained U-Net or a variant of it, for example U-Net++.

In an alternative embodiment, the trained neural network may use a self-attention mechanism to process data as in a transformer network. It may also be possible to use, in combination, convolutions, traditionally from convolution networks, and self-attention, traditionally from transformer networks.

In case of three-dimensional (3D) format of the input, such as a point cloud, a suitable neural network architecture may be a PointNet network or a variation of it. The PointNet network is capable of processing input in the 3D format, such as a point cloud.

In an embodiment, obtaining the output from the trained neural network may comprise obtaining a probability matrix, wherein the probability matrix allows assignment of the dental plaque parameter for the at least part of the digital 3D model. The probability matrix may comprise probability values associated with each element of the input. The probability values may specify probabilities of the dental plaque parameter being present in the corresponding input element.

The dental plaque parameter may be a plaque presence value which may be a simple binary indication of plaque presence on the at least one facet of the tooth surface. Thus, the trained neural network may be capable of classifying, based on previously learned data, the at least one facet of the tooth surface as comprising plaque or not comprising plaque. Instead of the at least one facet, other unit elements of the input may be classified such as verices, points, nodes, voxels, pixels, depending on the format of the input.

For example, a flag "PLAQUE" may be used to mark plaque presence, or a flag "NO PLAQUE" may be used to mark plaque absence. Advantageously, the user may obtain information whether dental plaque is present in the dental situation, from a single digital 3D model of the dental situation.

Alternatively or additionally, the dental plaque parameter be a plaque type. For example, detected plaque on the at least one tooth surface may be classified into pathogenic plaque, non-pathogenic plaque or calculus. Pathogenic plaque is acidic and may lead to other oral diseases such as caries or periodontal diseases, if untreated.

Consequently, information on the type of plaque present in the dental situation may be obtained from a single digital 3D model of the dental situation. Of particular clinical relevance is the information about high-risk pathogenic plaque accumulation in order to define appropriate treatment for the patient.

Alternatively or additionally, the dental plaque parameter may be a plaque thickness value. The detected plaque may be classified into one of predefined plaque thickness classes such as "no plaque", "thin plaque", "medium plaque", "thick plaque". "No plaque" plaque class may encompass the plaque thickness values less than 20 micrometers. "Thin plaque" may refer to plaque thickness values between 20 and 100 micrometers. "Medium plaque" may refer to plaque thickness values between 100 and 200 micrometers. "Thick plaque" may refer to plaque thickness values above 200 micrometers. Information on plaque thickness is of clinical importance because different thickness values of plaque require different treatment options. For example, it may be possible to remove a thin layer of plaque, lower than 100 micrometers, by constant tooth brushing. However, thick layers of plaque may require intervention of the dental practitioner. Having information on plaque thickness may allow the dental practitioner to correctly define a treatment for the patient.

A treatment recommendation may be automatically presented to the user, depending on plaque thickness value, as a part of the method according to the disclosure.

The dental plaque parameter may, in an embodiment, be a multi-class parameter comprising the plaque presence value, the plaque thickness value and/or the plaque type.

The method may comprise displaying, for example on the display screen, the digital 3D model with the dental plaque parameter assigned to the at least part of the digital 3D model. Displaying may comprise coloring the at least one facet of the tooth surface which comprises plaque. In that manner, regions such as facets on the digital 3D model, which correspond to regions with plaque in the actual dental situation, are colored to be easily distinguished from healthy regions of the digital 3D model.

As a result of the displaying, the information about plaque in the dental situation may be conveyed to the user. For example, the at least part of the digital 3D model comprising plaque may be highlighted to visually distinguish it from the rest of the digital 3D model. Additionally or alternatively, the at least part of the digital 3D model may be colored in a different color, or it may be encircled to visually distinguish the at least part of the digital 3D model comprising plaque from the rest of the digital 3D model. Alternatively, a line defining a border between the at least part of the digital 3D model comprising plaque and the rest of the digital 3D model may be highlighted.

In an example, displaying may comprise displaying a tabular overview showing each tooth surface of the at least part of the digital 3D model and the corresponding dental plaque parameter. This tabular overview may be in the form of a dental chart. Alternatively or additionally, the dental plaque parameter may be displayed directly on the digital 3D model, for example adjacent to corresponding tooth surface.

One particularly advantageous way of presenting plaque on the digital 3D model may be coloring the at least one facet of the tooth surface comprising plaque in a color corresponding to the color of a disclosing agent. For users such as dental practitioners this may be advantageous, as the presented results resemble use of the disclosing agent.

The method according to an embodiment may further comprise determining plaque density for the at least part of the digital 3D model. The plaque density may serve as another clinically relevant plaque parameter. Generally, high density of plaque reflects higher presence of plaque-causing bacteria which in turn may increase the risk of cariogenic and periodontal diseases. Plaque density values provide valuable input into how dense the plaque is on the tooth surface.

In an example, determining plaque density may comprise, for each facet with plaque, counting a number of neighboring facets that comprise plaque. The counting may be performed within a sphere of a pre-determined radius, for example at last five millimeter radius. The counting may alternatively be performed within a sphere of an adjustable radius, wherein the radius value depends on the anatomy of the tooth.

In another example, determining plaque density may comprise computing a distance from each facet with plaque to a next, closest facet with plaque.

The method may further comprise, based on the determined plaque density, coloring each facet of the at least part of the digital 3D model according to a density-based gradient color scheme. For example, regions with higher plaque density may be colored in darker colors while regions with low plaque density may be colored with brighter colors.

To color the appropriate unit elements, for example facets, determined to comprise plaque, the digital 3D model may be segmented. In an embodiment, the method may comprise obtaining a segmented 3D model by segmenting the digital 3D model into a plurality of teeth and gingiva. The segmented 3D model may comprise the at least one facet of the at least part of the digital 3D model. This segmentation process of the digital 3D model should not be confused with general semantic segmentation task the trained neural network may be suited for performing and which is hereby also referred to as classification per unit element of the input.

Segmenting the digital 3D model may be performed via the segmentation process which allows for identification of distinct dental objects such as individual teeth and/or surrounding gingiva in the virtual 3D model. Individual teeth can be assigned a tooth identifier, for example according to the Universal Numbering Notation (UNN) in which numerals 1 to 32 are assigned to human teeth. The segmentation process may comprise use of algorithms such as Principal Component Analysis (PCA) or harmonic fields. The segmentation process may alternatively or additionally comprise use of machine learning models.

In an embodiment, the method may further comprise, within the at least part of the digital 3D model comprising plaque, determining a first surface area of a tooth which comprises plaque, determining a second surface area of the tooth which corresponds to plaque absence, and determining a ratio of the first surface area to the sum of the first and second surface area. This ratio may be referred to as a Planimetric Plaque Index (PPI) and may give insight into what percentage of the tooth surface comprises plaque. This ratio may also be determined for the complete digital 3D model, thus giving insight into what percentage of overall teeth surface may be covered in plaque.

According to an embodiment, the method may further comprise determining a first number of tooth surfaces comprising plaque, determining a second number of tooth surfaces without plaque, and determining a ratio of the first number of tooth surfaces to a sum of the first and second number of tooth surfaces. This ratio may be referred to as plaque index and may provide insight into what percentage of overall tooth surfaces may be covered in plaque. Determining the plaque index is generally a desirable metric for dental practitioners. The plaque index determined according to the method of the disclosure is more accurate and reliable than determining the plaque index by manually counting tooth surfaces by the dental practitioner.

According to an embodiment, the plaque index may be calculated by assigning a score to each tooth surface of the tooth and obtaining a total score by dividing a sum of all scores with a number of tooth surfaces of the tooth. The score assigned to each tooth surface may be a numerical value between 0 and 3. Additionally or alternatively, the score assigned to each tooth surface may be a numerical value between 0 and 5 in which the total score corresponds to clinical measure known as the Turesky modified Quigley Hein Plaque Index (TQHPI) . The score assigned to each tooth surface may correspond to plaque density of the each tooth surface. Alternatively, the score assigned to each tooth surface may correspond to plaque thickness value of the each tooth surface.

Generally, all examples of plaque indices determined according to the disclosure are more accurate and reliable compared to determining mentioned plaque indices by manually counting tooth surfaces, and assigning relevant scores by the dental practitioners.

The trained neural network may be used to process additionally a further digital 3D model of the dental situation. The further digital 3D model may represent the dental situation, captured by the intraoral scanner, at a later time point compared to the digital 3D model previously addressed. In this way, results of the trained neural network processing for the digital 3D model and the further digital 3D model may be compared. This comparison may be beneficial for tracking progress of plaque development in the dental situation.

Therefore, the method according to an embodiment may further comprise:
- receiving, by the processor, the further digital 3D model of the dental situation,
- providing at least a part of the further digital 3D model as a further input to the trained neural network, wherein the at least part of the further digital 3D model comprises natural color information and/or geometric information associated with the at least one tooth surface of the dental situation,
- obtaining a further output from the trained neural network based on the provided further input, wherein the further output comprises a further dental plaque parameter associated with the at least one tooth surface,
- assigning the further dental plaque parameter to the at least part of the further digital 3D model, and
- displaying the further digital 3D model with the further dental plaque parameter assigned to the at least part of the further digital 3D model.

The further dental plaque parameter may be a single class parameter or a multi-class parameter as the dental plaque parameter already described previously.

The method according to an embodiment may comprise obtaining a further segmented 3D model by segmenting the further digital 3D model into a further plurality of teeth and gingiva. The further segmented 3D model may comprise the at least one unit element, for example facet, of the at least part of the further digital 3D model. Segmentation may be performed according to the segmentation process described previously for the digital 3D model.

Displaying the further digital 3D model with the further dental plaque parameter assigned to the at least part of the further digital 3D model may comprise displaying simultaneously the dental plaque parameter and the further dental plaque parameter. This may be performed by displaying a superimposed digital 3D model, wherein the superimposed digital 3D model may be obtained by geometrically aligning the digital 3D model and the further digital 3D model of the dental situation.

A controller may be arranged which may allow for adjustable display of the dental plaque parameter and/or the further dental plaque parameter on the superimposed digital 3D model. By means of user manipulation, the controller may be positioned between a first and a second position. The first position of the controller may correspond to displaying substantially only the dental plaque parameter on the superimposed digital 3D model. The second position of the controller may correspond to displaying substantially only the further dental plaque parameter on the superimposed digital 3D model. In this manner, a visual representation of plaque progress in the dental situation may be obtained. There may be further positions of the controller between the first and second position that may correspond to displaying at least a portion of both the dental plaque parameter and the further dental plaque parameter. The controller may be referred to as a slider or a 3D slider.

In order to develop the capability of correctly recognizing plaque on a digital 3D model, a neural network may first be trained for that specific task. Training may comprise setting the appropriate weights within the neural network. Once the neural network satisfies training criteria, it may be referred to as the trained neural network.

In an embodiment of the disclosure, a computer-implemented method for training a neural network for detecting dental plaque is disclosed, the method comprising:
- obtaining a training data for the neural network, the training data comprising a first training digital 3D model of a dental situation with plaque present, and a second training digital 3D model of the dental situation with plaque removed,
- generating target data by geometrically subtracting the second training digital 3D model of the dental situation from the first training digital 3D model of the dental situation to obtain a 3D layer of plaque,
- inputting the first training digital 3D model of the dental situation into the neural network to obtain an output from the neural network,
- comparing the output from the neural network to the generated target data to obtain a loss,
- adjusting weights of the neural network based on the obtained loss, and
- repeating the inputting step until the loss satisfies a stopping criterion.

The training data may comprise digital 3D models, also referred to as training digital 3D models, of a plurality of different dental situations. This data may be a plurality of intraoral scans obtained by scanning various patients. For each patient's dental situation, at least two digital 3D models may be obtained. For example, the training data may comprise the first training digital 3D model of a first dental situation comprising plaque. Plaque presence may be determined for example by using the common disclosing agent. Next, the second training digital 3D model of the first dental situation, with plaque removed, may be obtained. Plaque from the dental situation may be removed, for example by simple tooth brushing, in order to obtain the second training digital 3D model.

Thereby, for each of the plurality of different dental situations, two training digital 3D models may be obtained - one comprising plaque and the other without plaque.

Next, target data may be generated which may be a plurality of isolated 3D plaque layers. Generating target data may comprise geometrically subtracting the second training virtual 3D model of the dental situation from the first training virtual 3D model of the dental situation, to obtain the 3D plaque layer. This layer represents part of the target data. The same process may be repeated for other training digital 3D models.

Next, the first training digital 3D model of the dental situation may be input into the neural network to obtain an output from the neural network. This output may be compared to the generated target data to obtain the loss. Based on the obtained loss, the weights of the neural network may be adjusted, and the inputting step may be repeated until the loss satisfies the stopping criterion.

The particular advantage of the mentioned training method is that target data may be generated autonomously, through geometrical subtraction of the training 3D models with and without plaque. In particular, no manual annotation of data is required.

In addition to, or alternatively to the training method for determining plaque presence, the above-described training method may be used to train the neural network to determine plaque thickness and/or plaque type.

A further example of a computer-implemented method for training the neural network for detecting dental plaque may be described as follows. The overall aim for the training process of the neural network may be to develop the trained neural network capable of classifying its input according to a desired plaque parameter such as plaque presence, plaque type and/or plaque thickness.

The training process may comprise the use of a training dataset that has been labeled manually. The training dataset may be in 2D format, i.e. it may comprise a plurality of 2D training images of teeth or parts of teeth. Additionally, the training dataset may comprise associated labels where the labels correspond to the dental plaque parameter. The labeling may be performed for example by a qualified dental practitioner. The training dataset may be labeled according to the indication of plaque presence, for example with "Yes" or "No" labels indicating plaque presence or absence, respectively. Additionally or alternatively, the training dataset may be labeled with plaque type labels and/or plaque thickness labels.

In an example, the training dataset may also be in 3D format in which the labels may be placed directly.

The labels may be regarded as a target or a ground truth for a given training data set. Additionally or alternatively, the ground truth may be information on plaque presence, plaque thickness and/or plaque type, obtained through use of the disclosing agent on a plurality of various dental situations. An advantage of such ground truth data lies in the clinical accuracy and acceptance, due to information originating from use of the disclosing agent.

The training dataset may be fed into the neural network. Output of the neural network may be a probability value, indicating which output class the input belongs to. An error may be determined between the ground truth and the output by means of a loss function. One example of such a loss function may be a mean-squared-error function. In order to train the neural network this loss function should be minimized. The minimization of the loss function may be achieved for example by using a stochastic gradient descent algorithm. Through this process of minimizing the loss function, weights of the neural network may be updated.

The training process may be an iterative process in which the same training data set may be fed, iteratively, into the neural network until a stopping criterion is reached.

The stopping criterion, regardless of the training process employed, may be a specific threshold value for the loss. The stopping criterion may, additionally or alternatively, be a number of training epochs.

The 3D intraoral scanner, besides having the optical system to capture geometric and color information about the dental situation, may also be equipped with means to capture fluorescence emitted from the teeth in the dental situation. This may be achieved by integrating, in the intraoral scanner, a light source that can emit light intended to excite fluorescence in parts of the dental situation, a sensor that can measure that emitted fluorescence, and a filter to block the excitation light from the sensor while transmitting the fluorescent light, thereby allowing observance of fluorescence. By scanning the dental situation with such a 3D intraoral scanner, fluorescence information may be obtained. This may be of particular interest for plaque detection because metabolites of the bacteria causing plaque emit red fluorescence when illuminated by the light source with an emission spectrum of, for example, below 500 nanometers. The fluorescence information obtained may be in the form of red (R) fluorescence signal values and green (G) fluorescence signal values of the Red-Green-Blue (RGB) color space for each unit element of the at least part of the 3D digital model. Thereby, the fluorescence information may be stored in each point, facet, voxel and/or node of the at least part of the digital 3D model.

The at least part of the digital 3D model may additionally comprise fluorescence information associated with the at least one tooth surface of the dental situation, wherein the fluorescence information comprises the red (R) fluorescence signal value and the green (G) fluorescence signal value.

The fluorescence information may comprises the red (R) fluorescence signal value and the green (G) fluorescence signal value per unit element of the at least part of the digital 3D model.

This fluorescence information may be used as an additional input to the trained neural network. Alternatively, it may be used to filter the output of the trained neural network to determine pathogenic plaque presence. In a further example, the fluorescence information may be used independently to determine plaque presence in the dental situation.

In an embodiment, a computer-implemented method for detecting dental plaque on the digital 3D model of the dental situation is disclosed, where the method comprises:
- receiving, by the processor, the digital 3D model of the dental situation,
- providing the at least part of the digital 3D model as the input to the trained neural network, wherein the at least part of the digital 3D model comprises natural color information and/or geometric information associated with the at least one tooth surface of the dental situation,
- obtaining the output from the trained neural network based on the provided input, wherein the output comprises the dental plaque parameter associated with the at least one tooth surface, and wherein the dental plaque parameter is the plaque presence value,
- determining, based on a function of the red (R) fluorescence signal value and the green (G) fluorescence signal value associated with the at least part of the digital 3D model, that the plaque present on the at least one tooth surface is pathogenic plaque.

It may then be possible to display the digital 3D model and visualize both the plaque presence, as realized by using the trained neural network, as well as pathogenic plaque, as determined by using the fluorescence information.

In the above-described method, the trained neural network may be used to detect plaque presence while the fluorescence information may be used, in addition, to assess whether the determined plaque is pathogenic plaque. It may be also possible to utilize the fluorescence information exclusively, to establish presence of pathogenic plaque on the at least part of the digital 3D model.

According to an example, the method may comprise filtering the output of the trained neural network by using the fluorescence information to identify pathogenic plaque presence on the at least one tooth surface. Namely, among the facets determined as comprising plaque, the fluorescence information may be subsequently used to determine which facets comprise pathogenic plaque.

The function of the red (R) fluorescence signal value and the green (G) fluorescence signal value may be a ratio R/G. Alternatively, the function may be a ratio (R-G)/(R+G). In a further example, the function may be a difference R-G. Different functions of the red (R) fluorescence signal value and the green (G) fluorescence signal value may be utilized to detect rise of the red (R) fluorescence signal value with rise of plaque level. It has been observed that particularly advantageous is the difference R-G due to lowest values of noise contribution, allowing for efficient determination of red fluorescence signal.

The difference between the red (R) fluorescence signal value and the green (G) fluorescence signal value, which may also be referred to as a difference signal, may be a particularly advantageous function because this difference signal has low noise contribution and a simple direct scaling with the desired red fluorescence signal.

Detecting pathogenic plaque presence may comprise determining that an amplitude of the difference signal is larger than a noise component of the difference signal. The noise component of the difference signal may refer to noise contributions from both the red (R) fluorescence signal value and the green (G) fluorescence signal value.

In another example, the function of the red (R) fluorescence signal value and the green (G) fluorescence signal value may be expressed as: R-G-(Rh-Gh), wherein Rh is a healthy reference value for red fluorescence and Gh is a healthy reference value for green fluorescence. Both the healthy reference value for red fluorescence (Rh) and the healthy reference value for green fluorescence (Gh) may be computed per tooth of the digital 3D model.

The healthy reference value for green fluorescence (Gh), for a tooth of the digital 3D model, may be obtained by sampling and averaging all values of green (G) fluorescence for all vertices belonging to that specific tooth.

Alternatively or additionally, the healthy reference value for green fluorescence (Gh), for the tooth of the digital 3D model, may be obtained by averaging all values of green (G) fluorescence for all vertices belonging to the tooth, wherein the values of green (G) fluorescence are higher than a threshold value Gt. This additional condition may be advantageous in order to exclude regions with caries and pathogenic plaque from the computation of the healthy reference. Namely, caries may also emit fluorescence when illuminated. However, fluorescence profile of caries is characterized by loss in green (G) fluorescence value, while pathogenic dental plaque is characterized by the rise in the red (R) fluorescence value. By including only the values of green (G) fluorescence higher than the threshold value Gt in the computation for the healthy reference value for green fluorescence (Gh), it may be possible to detect the dental plaque parameter and exclude false positives in form of caries presence detection. The threshold value Gt may also act as a filter to exclude non-tooth material, such as fillings, that does not emit fluorescence when excited.

The healthy reference value for green fluorescence (Gh) may be obtained experimentally and be set as a predefined numerical value.

The healthy reference value for red fluorescence (Rh) may be calculated in a similar way as previously described for the healthy reference value for green fluorescence (Gh). Namely, the healthy reference value for red fluorescence (Rh) may be computed per each tooth of the digital 3D model. The healthy reference value for red fluorescence (Rh), for a single tooth of the digital 3D model, may be obtained by sampling and averaging all values of red (R) fluorescence for all vertices belonging to that single tooth.

The healthy reference value for red fluorescence (Rh) may alternatively be obtained experimentally and be set as a predefined numerical value.

The utilization of function R-G-(Rh-Gh) is advantageous as it accurately reflects the fluorescence behavior. Due to its sensitivity it allows for displaying the dental plaque parameter over large area of the teeth.

In a further example, the function of the red (R) fluorescence signal value and the green (G) fluorescence signal value for the at least one unit element of the at least part of the digital 3D model may be a difference of the ratio R/G of the red (R) fluorescence signal value and the green (G) fluorescence signal value, and a ratio Rh/Gh of the healthy reference value for red fluorescence (Rh) and the healthy reference value for green fluorescence (Rg) . This difference of two ratios may be expressed as: R/G-Rh/Gh. The characteristic of this difference function of two ratios is that it may reflect a more realistic pathogenic plaque formation due to sharper edges visible on the digital 3D model 101. To dental practitioners, results obtained in this way, and visualized, provide a common and familiar view on pathogenic plaque formation.

The above examples of functions utilizing healthy references, R-G-(Rh-Gh)and R/G-Rh/Gh, may be advantageous as they may provide insight into a relative increase of red fluorescence compared to green fluorescence, which is a characteristic of pathogenic plaque fluorescence profile. Due to this property, it may be possible to use these functions on multiple different 3D models for various dental situations, and obtain normalized results. Namely, these functions are robust to variable absolute values of green fluorescence in different people. Additionally, the fact that different 3D models are affected by different ambient light conditions during scanning is not reflected in obtained results. In general, these functions are less susceptible to factors affecting variability of the red (R) fluorescence signal value and the green (G) fluorescence signal value in different 3D models. The contribution of the terms comprising healthy references is reflected in that they allow for normalization of different environmental and/or patient-characteristic conditions.

A computer program product is further disclosed. The computer program product according to an embodiment may comprise instructions which, when the program is executed by a computer, causes the computer to carry out the method of any one or more of presented embodiments.

Further, the disclosure comprises a non-transitory computer readable medium. The non-transitory computer readable medium may comprise instructions which, when executed by a computer, cause the computer to carry out the method of any one or more of presented embodiments.

### Brief description of the figures

Aspects of the disclosure may be best understood from the following detailed description taken in conjunction with the accompanying figures. The figures are schematic and simplified for clarity, and they just show details to improve the understanding of the claims, while other details are left out. The individual features of each aspect may each be combined with any or all features of other aspects. These and other aspects, features and/or technical effects will be apparent from and elucidated with a reference to the illustrations described hereinafter in which:
Figure 1 illustrates a user interface with a displayed digital 3D model of a dental situation.
Figure 2 is a flow chart illustrating a method according to an embodiment.
Figure 3A shows how plaque may be visualized on the dental situation when using a disclosing agent.
Figure 3B illustrates how plaque may be visualized on the digital 3D model of the dental situation, resembling use of the disclosing agent.
Figure 4 illustrates a user interface for detecting and visualizing plaque on the digital 3D model of the dental situation.
Figure 5A shows a digital 3D model with displayed plaque and a plaque index.
Figure 5B shows the digital 3D model and a further digital 3D model with displayed plaque and the plaque index.
Figure 6 illustrates a trained neural network used in the method according to an embodiment.
Figure 7 is a flowchart illustrating a method to train a neural network for plaque detection.
Figure 8 illustrates a dental scanning system.
Figure 9 illustrates an exemplary workflow of a patient's visit to a dental practitioner.

### Detailed description

In the following description, reference is made to the accompanying figures, which show by way of illustration how the invention may be practiced.

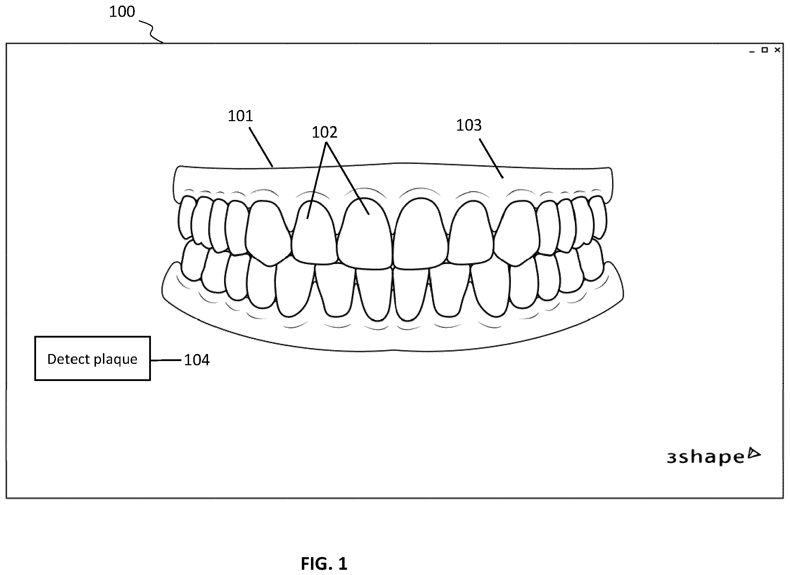

Figure 1 illustrates a user interface 100 with a displayed digital 3D model 101 of a patient's dental situation. The digital 3D model 101 may be displayed on a display screen in form of a 3D mesh, a point cloud, a 3D graph, a volumetric representation, or any other suitable 3D representation form. The digital 3D model 101 comprises a lower jaw and/or an upper jaw with multiple teeth representations. The digital 3D model 101 accurately represents the patient's dental situation and may be constructed based on scan data collected in a scanning process in which, for example an intraoral scanner 825 is used to scan the patient's dental situation comprising teeth and gingiva. The captured scan data can be used to construct the digital 3D model 101 and render it on the display screen. The scan data or the digital 3D model 101 can be stored in and accessed from a memory device of a computer system. The collected scan data may comprise natural color information, geometric information, infrared information and/or fluorescence information related to the patient's dental situation.

The user interface 100 may comprise a button 104 which, once engaged by a user, initiates the method for identifying dental plaque on the digital 3D model 101. Throughout the disclosure, dental plaque is also referred to as plaque. Identifying plaque may comprise identifying presence of plaque but also identifying any further dental plaque parameter such as plaque thickness and/or plaque type. The method may also be initiated automatically, without user engagement.

To identify and separate individual teeth 102 and gingiva 103 within the digital 3D model 101, the digital 3D model 101 may be segmented. This means that facets, for example facets of the 3D mesh representation of the digital 3D model, belonging to individual teeth 102 as per Universal Numbering System/Notation (UNN), may be determined. In this way individual teeth 102, or parts of the individual teeth 102, may be analyzed for identifying plaque. Segmentation of the digital 3D model 101 is an optional step, and the complete digital 3D model 101 may instead be analyzed for plaque presence.

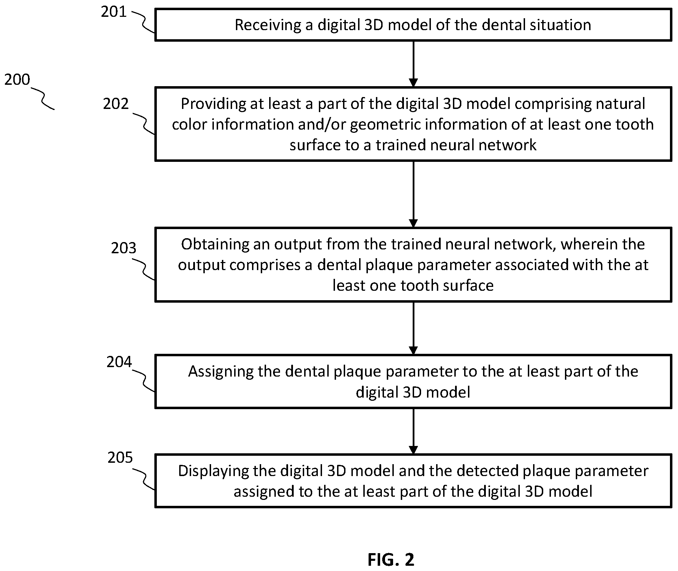

Figure 2 shows a flowchart illustrating a method 200 according to an embodiment.

First, the digital 3D model 101 may be received, by the processor, in step 201. The digital 3D model 101 may be stored in a memory of a computer system, for example in a Standard Triangle Language (STL) format. The digital 3D model 101 may be received by the processor, for example when the user engages the button 104 in the user interface 100. The digital 3D model 101 may usually be displayed on the display screen in the form of the 3D mesh, the point cloud, the 3D graph, the volumetric representation, or any other suitable 3D representation form.

Step 202 of the method 200 illustrates providing the at least part of the digital 3D model 101 as an input to the trained neural network 600, wherein the at least part of the digital 3D model 101 may comprise natural color information and/or geometric information associated with at least one tooth surface of the dental situation. It may be pointed out that tooth surfaces of the actual dental situation are accurately represented by tooth surfaces on the digital 3D model, thereby the at least one tooth surface of the dental situation may have a corresponding tooth surface the digital 3D dental model.

The at least part of the digital 3D model 101 may be provided as the input 601, in any format suitable for processing by the trained neural network 600. For example, the trained neural network 600 may be capable of processing 2D input format, such as 2D image, or 3D input format, such as point clouds or 3D meshes. Providing the at least part of the digital 3D model 101 to the trained neural network 600 may comprise generating a numerical representation, such as matrix representation, of the 2D and/or 3D input formats.

Step 203 illustrates obtaining an output 605 from the trained neural network 600 based on the provided input 601, wherein the output 605 may comprise a dental plaque parameter associated with the at least one tooth surface. The dental plaque parameter may be understood to be a single-class or a multi-class parameter characterizing dental plaque. For example, the dental plaque parameter may be a plaque presence value, a plaque thickness value and/or a plaque type.

The dental plaque parameter may be obtained per facet of the input, if the input is in format of the 3D mesh. The dental plaque parameter may be obtained per point of the input, if the input is in format of the point cloud. The dental plaque parameter may be obtained per voxel of the input, if the input is in format of the volumetric representation. The dental plaque parameter may be obtained per pixel of the input, if the input is in format of a 2D image. In general, the output 605 of the trained neural network 600 may comprise the dental plaque parameter obtained per unit element of the input 601. The unit element may be understood as a pixel, a voxel, a facet, a node and/or a point.

Step 204 of the method 200 illustrates assigning the dental plaque parameter to the at least part of the digital 3D model 101. For example, the output 605 of the trained neural network 600 may comprise the dental plaque parameter, for example plaque presence value "YES" relating to a facet of the digital 3D model 101 which served as the input 601. Subsequently, this facet, which may have its own identifier defining its location in the digital 3D model 101, may be marked as comprising plaque. Through this assignment step, it may be possible to link the correct region of the digital 3D model 101 with the plaque presence. Similar may apply to other type of unit elements of the input, which may be pixels, voxels, points and/or nodes. All types of the unit elements of the input may have their designated identifiers which associate the unit elements of the input 601 to the correct region on the digital 3D model 101. For example, the one or more points of the point cloud representing the digital 3D model 101 may have an identifier defining the location of the one or more points in the point cloud.

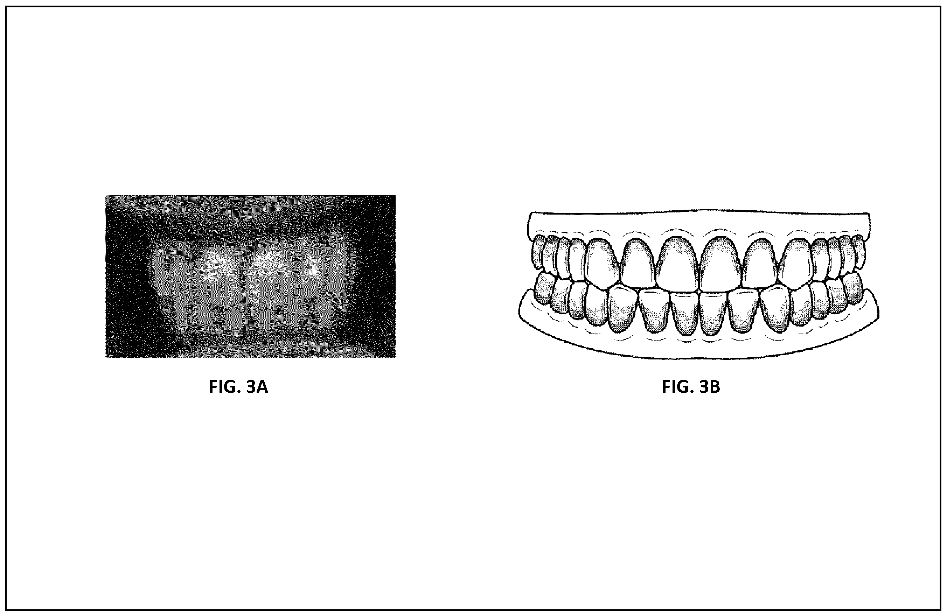

Step 205 of the method 200 illustrates displaying the digital 3D model 101 with the dental plaque parameter assigned to the at least one tooth surface. Displaying thus may comprise displaying the digital 3D model with highlighted regions that comprise plaque, as determined by the method 200. Displaying of the digital 3D model 101 may be further understood with reference to figures 3, 4 and 5.

Figure 3A illustrates a dental situation with a disclosing agent applied in order to stain plaque layer in a color, usually red or blue, for it to be visible to a dental practitioner. It is this effect that may be reproduced once plaque is detected on the digital 3D model 101, as shown in figure 3B.

Figure 3B shows the digital 3D model 101 where teeth, or at least parts of their surfaces, may be colored to visualize plaque presence. The color which may be used for coloring plaque regions may be the same, or similar color, to the color of the disclosing agent. In this way, the dental practitioner may be presented with a familiar visualization of plaque on the digital 3D model 101.

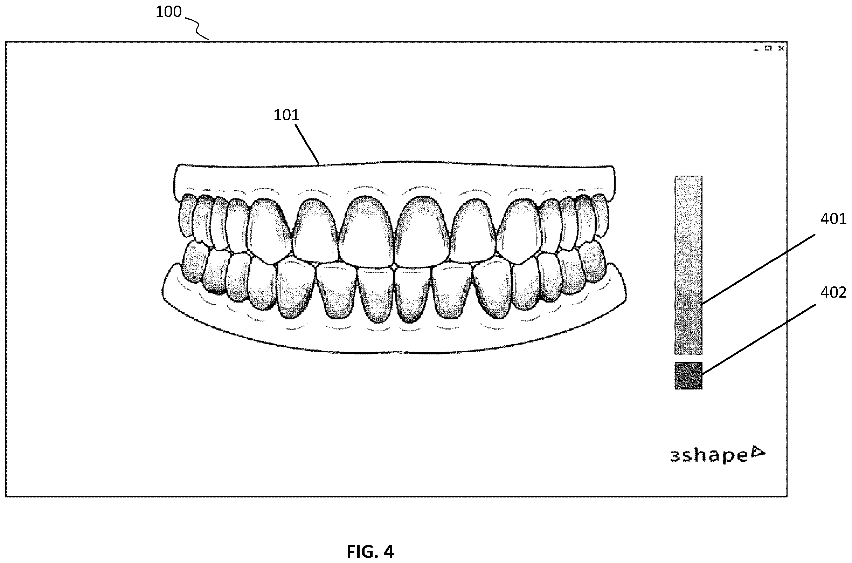

Figure 4 illustrates the user interface 100 for detecting and visualizing plaque on the digital 3D model 101 of the dental situation. The digital 3D model 101 may be colored according to the obtained dental plaque parameter value in the method 200 for determining plaque. Coloring may be performed per unit element of the digital 3D model 101, for example per facet, voxel, node and/or point.

The dental plaque parameter may comprise the plaque thickness value. Depending on the detected plaque thickness value, regions of the digital 3D model 101 may be colored in a different shade of the color used. This has effect of visualizing the thin, medium or thick plaque. A gradient bar 401 may be displayed and may serve as a legend to interpret how thick a specific point of plaque is. The plaque thickness value may also be displayed if the user brings the pointer, for example a mouse pointer, over a point on the digital 3D model 101 that comprises plaque.

In some embodiments of the disclosure, fluorescence information associated with at least one tooth surface of the dental situation may be used to determine presence of pathogenic plaque on the at least one tooth surface. This information may be used as a part of the input 601 to the trained neural network 600. Alternatively, the fluorescence information may be used to filter the output 605 of the trained neural network 600 and identify pathogenic plaque. In figure 4, an indicator 402 may be displayed to show in what color the pathogenic plaque is displayed on the digital 3D model 101. The colors used to visualize pathogenic plaque may usually be darker compared to colors used to visualize non-pathogenic plaque.

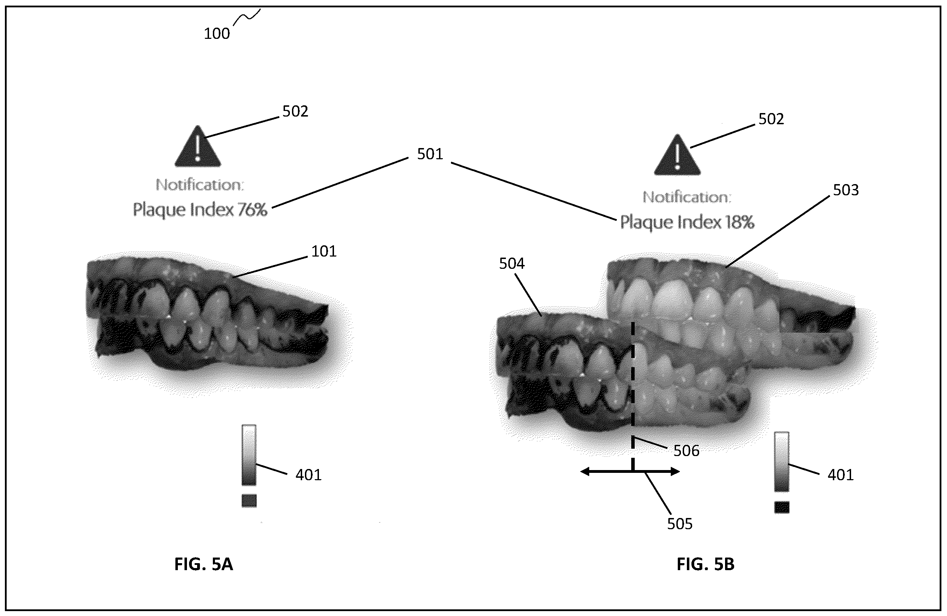

Figure 5A illustrates the digital 3D model 101 where plaque regions have been colored according to detected plaque thickness values. Correspondence of the plaque thickness values to the colors used to color the regions of the digital 3D model 101 is illustrated with the gradient bar 401. Additionally or alternatively, the indicator 402 may indicate the color used to visualize pathogenic plaque on the digital 3D model 101. A value for a plaque index 501 may additionally be displayed. Additionally or alternatively, a plaque presence indicator 502 may be displayed indicating to the user that plaque has been detected.

It may be observed, from figure 5A, that the multi-class dental plaque parameter may be detected for the single digital 3D model 101. This single digital 3D model 101 may also be referred to as a baseline scan.

In order to track the progress of plaque in the dental situation, a further digital 3D model 503 may be received. The trained neural network according to the disclosure may be additionally applied to this further 3D model 503 in order to detect plaque. The further digital 3D model 503 may be obtained from a further scan data obtained from scanning the dental situation at a later time point compared to obtaining the baseline scan. The later time point may be, for example, one year later. The further digital 3D model 503 may also be referred to as a follow-up scan.

The baseline scan 101 and the follow-up scan 503 may then be compared to identify changes in the plaque parameters. The two 3D models 101, 503 may be displayed simultaneously, for example one next to each other. Alternatively, the 3D models 101, 503 may be aligned and superimposed. By aligning the baseline scan 101 and the follow-up scan 503 a superimposed 3D model 504 may be obtained. In order to correctly align the two 3D models 101, 503, it may be necessary to segment each 3D model and subsequently align the corresponding points between the two 3D models 101, 503.

The segmentation process may be performed in different ways, for example based on identification of individual facets or group of facets belonging to a tooth representation. This may allow for identifying objects such as individual teeth and/or surrounding gingiva in the digital 3D models 101, 503 representing the patient's dentition. Therefore, the output of the segmentation process may be individual tooth representations which are usually displayed in form of solid tooth objects, tooth meshes or tooth point clouds.

According to an example, segmenting may comprise use of surface curvatures to identify boundaries of tooth representations. A minimum principal curvature and a mean principal curvature can be used to measure surface property quantitatively. Then, a cutting plane to separate gingiva and teeth part may be produced, based on Principal Component Analysis algorithm (PCA) . A curvature threshold value, for example a constant value, can be selected to distinguish tooth boundary regions from the rest of surface.

In another example, segmenting the digital 3D models 101, 503 may comprise use of a harmonic field to identify tooth boundaries. On the digital 3D model, a harmonic field is a scalar attached to each mesh vertex satisfying the condition: ΔΦ=0, where Δ is Laplacian operator, subject to Dirichlet boundary constraint conditions. Above equation may be solved, for example using least squares method, to calculate the harmonic field. Segmented tooth representations can then be extracted by selecting optimal isolines connecting datapoints with same value, as tooth representation boundaries.

In yet another example, segmenting the digital 3D model 101 and/or further digital 3D model 503 may comprise use of a segmentation machine learning model. In particular, the digital 3D model may be converted into a series of 2D digital images taken from different perspectives. The segmentation machine learning model may be applied to the series of 2D digital images. For each 2D digital image, classification can be performed to distinguish between different teeth classes and gingiva. After classification of each 2D digital image, back-projection onto the digital 3D model may be performed. This method for segmenting the digital 3D model may be advantageous as the segmentation machine learning model utilizes the series of 2D digital images, overall resulting in fast and accurate classification. The segmentation machine learning model may, in an example, use point clouds as data structures, instead of 2D digital images.

A controller 505 may be arranged in order to allow the user to alternate between displaying the digital 3D model 101 and the further digital 3D model 503. The controller 505 may allow the user to easily toggle between displaying the different 3D models. The superimposed digital 3D model 504 may comprise a boundary, shown as dashed line 506, which may be translated according to user's manipulation of the controller 505. The boundary 506 may demarcate which part of the superimposed digital 3D model 504 may be shown as the digital 3D model 101 and which part of the superimposed digital 3D model 504 may be shown as the further digital 3D model 503.

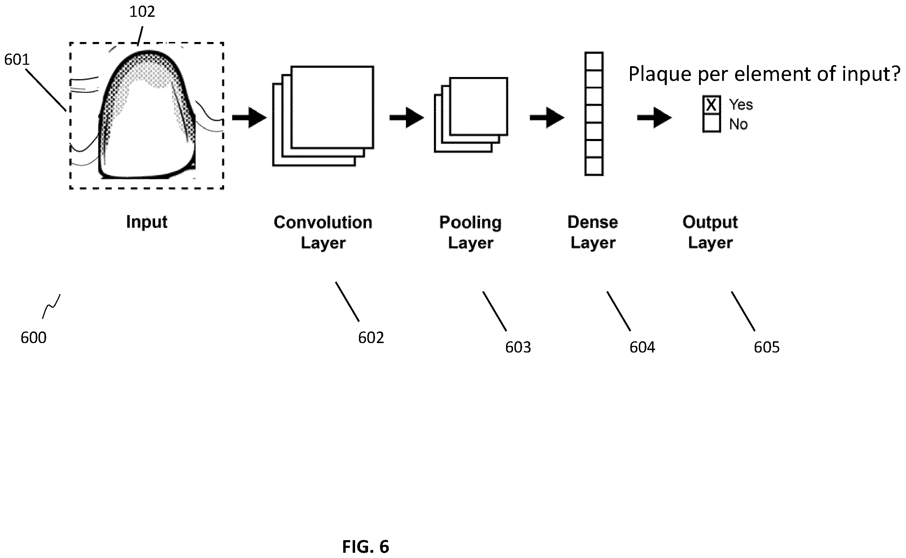

Figure 6 illustrates the trained neural network 600 used in the method according to an embodiment. The trained neural network 600 in this case may be a convolutional neural network and may comprise a plurality of convolution layers 602 capable of capturing low-level features of the input, i.e. obtaining convolved features. Moreover, one or more of pooling layers 603 may be present, responsible for reducing the spatial size of convolved features. Convolutional neural networks may be particularly suitable for processing matrix information representing 2D images.

The input 601 may be in a 2D or 3D format and may comprise the at least part of the digital 3D model 101. Figure 6 illustrates the input 601 in 2D format. The at least part of the digital 3D model 101 may be a 2D image of a tooth 102 which has its labial surface affected by plaque. The at least part of the digital 3D model 101 may alternatively comprise one or more of 2D images of the labial surface of the tooth 102 or at least one pixel of the 2D image of the tooth 102. It should be understood that providing the input in the 2D or 3D format may comprise converting these data structures into input tensors which may be processed by the trained neural network.

The output 605 may comprise the at least one probability value representing the likelihood that the at least part of the digital 3D model 101 comprise the dental plaque parameter.

In the case of figure 6, the dental plaque parameter is the plaque presence value on the at least part of the digital 3D model 101. The trained neural network 600 in this case may perform a classification task for each unit element of the input 601, thereby classifying the each unit element of the input 601 into "Yes" or "No" output class. Alternatively or additionally, the dental plaque parameter may comprise the plaque thickness value and/or the plaque type present on the tooth 102.

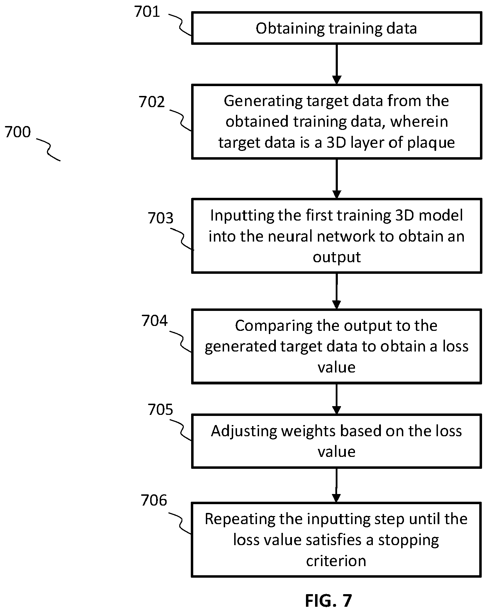

Figure 7 illustrates a flowchart of a computer-implemented method 700 for training a neural network for detecting dental plaque.

Step 701 of the method 700 illustrates obtaining training data for the neural network, wherein the training data may comprise a first training digital 3D model of a dental situation with plaque present, and a second training digital 3D model of that dental situation with plaque removed.

The training data may comprise a plurality of different digital 3D models referred to as training digital 3D models. This data may be a plurality of intraoral scans obtained by scanning various patients . For example, the training data may comprise the first training digital model of a dental situation comprising plaque. Plaque presence may be determined for example by using the common disclosing agent. Next, the second training digital 3D model of the same dental situation with plaque removed may be obtained. Plaque from the dental situation may be removed, for example by simple tooth brushing, in order to obtain the second training digital 3D model.

Step 702 illustrates generating target data by geometrically subtracting the second training digital 3D model of the dental situation from the first training digital 3D model of the dental situation to obtain an isolated 3D layer of plaque. This 3D layer may be used as the target data in order to "teach" the neural network to recognize such plaque layer in the input.

The same process may be repeated for other training digital 3D models associated to other dental situations in order to generate a plurality of different isolated plaque layers. Isolated plaque layers in this case serve as "ground truth".

Step 703 of the method 700 illustrates inputting the first training digital 3D model of the dental situation into the neural network to obtain an output from the neural network.

Step 704 illustrates comparing the output from the neural network to the generated target data to obtain a loss value.

Step 705 illustrates adjusting weights of the neural network based on the comparison of the output to the target data. The obtained loss value should be minimized, for example by using stochastic gradient descent algorithm (SGD).

Step 706 illustrates repeating the inputting step until the loss value satisfies a stopping criterion. The training process is therefore an iterative process.) The training process may be stopped when the loss value reaches a stopping criterion. For example, the stopping criterion may be a threshold value for the loss value. The stopping criterion may also be a number of epochs (training cycles) after which performance metrics cease to increase.

The particular advantage of the mentioned training method is that target data may be generated autonomously, through geometrical subtraction of the training 3D models with and without plaque.

In addition to, or alternatively to the training method for determining plaque presence, above-described training method may be used to train a neural network to determine other types of dental plaque parameters such as plaque thickness value or plaque type.

Another example of obtaining ground truth data may be, instead of generating 3D layers of plaque by geometric subtraction, to use manually annotated 3D scans with labels associated with plaque. Even further example of obtaining ground truth data may be to obtain information about plaque presence using the disclosing agent, which may be most accurate from a clinical standpoint. Once the plaque is stained using the disclosing agent, corresponding dental situation may be scanned to obtain a digital form of the dental situation. Obtained digital scan may be segmented and segments with a specific property, for example segments having Red, Green, Blue (RGB) values that correspond to the color of stained plaque, may be selected as the ground truth data. Ground truth data may refer to general plaque presence, but also to plaque thickness and/or type of plaque such as pathogenic plaque.

Ground truth associated with pathogenic plaque presence in the patient's dental situation may be obtained in a manner like the one described above regarding plaque presence. By scanning the patient with the intraoral scanner 825, wherein the patient has a two-tone or a three-tone disclosing agent applied to their dental situation to highlight the pathogenic plaque, a digital scan may be obtained. This digital scan may be segmented to isolate the regions corresponding to the pathogenic plaque. The isolated regions may then be used as the target data to train the neural network to detect pathogenic plaque in the input.

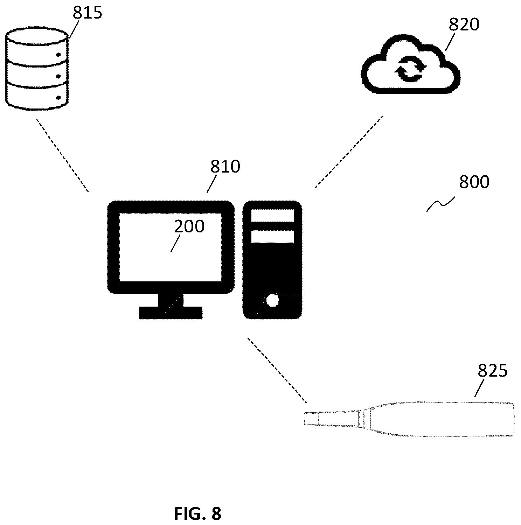

Figure 8 illustrates a dental scanning system 800 which may comprise a computer 810 capable of carrying out any method of the disclosure. The computer may comprise a wired or a wireless interface to a server 815, a cloud server 820 and the intraoral scanner 825. The intraoral scanner 825 may be capable of recording the scan data comprising geometrical information, natural color information and/or fluorescence information associated with the patient's dentition. The intraoral scanner 825 may be equipped with various modules such as a fluorescence module, natural color module and/or an infrared module and thereby capable of capturing information relevant for diagnosing dental conditions such as caries, tooth cracks, gingivitis, dental recession and/or plaque.

The dental scanning system 800 may comprise a data processing device configured to carry out the method according to one or more embodiments of the disclosure. The data processing device may be a part of the computer 810, the server 815, the cloud server 820, or a hand-held device not shown in the figure.

A non-transitory computer-readable storage medium may be comprised in the dental scanning system 800. The non-transitory computer-readable medium can carry instructions which, when executed by the computer, cause the computer to carry out the method according to one or more embodiments of the disclosure.

A computer program product may be embodied in the non-transitory computer-readable storage medium. The computer program product may comprise instructions which, when executed by the computer, cause the computer to perform the method according to any of the embodiments presented herein.

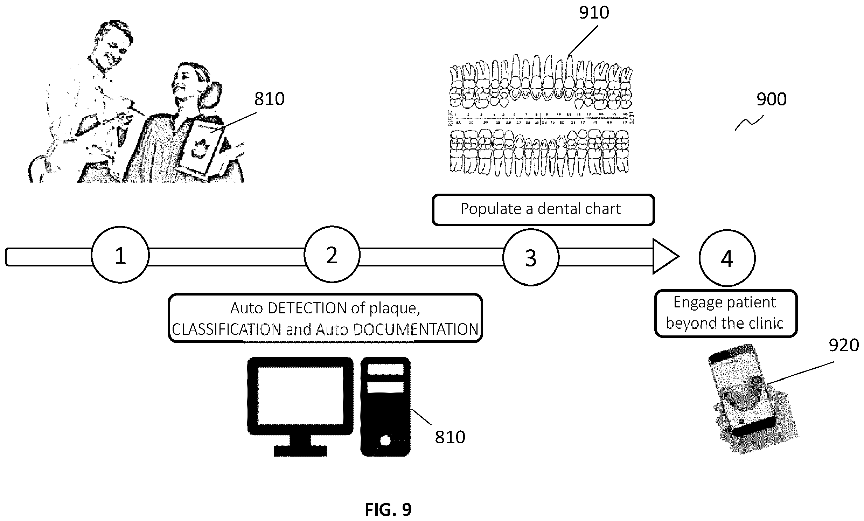

Figure 9 illustrates an exemplary workflow 900 of the patient's visit to the dental practitioner. In step 1 the patient's oral cavity may be scanned using the intraoral scanner 825. In step 1 of the workflow 900 in Figure 9, while scanning, the dental practitioner may be able to see the scanning live on a display unit of the computer 810.

At step 2 of Figure 9, the scan data may be further analyzed utilizing one or more software applications in order to detect the dental plaque parameter in the patient's oral cavity. The step 2 of the workflow 900 may utilize software applications (i.e. application modules) that are configured to detect, classify, monitor, predict, prevent, visualize and/or record plaque that may be present in the patient dental situation.

Step 3 of the workflow 900 exemplifies populating a dental chart 910 with information obtained in step 2, such as for example plaque presence, plaque index, plaque thickness value and/or plaque type. This information may be recorded per tooth surface. The dental chart 910 may be comprised as a part of a wider patient management system.

Furthermore, as illustrated in step 4 of figure 9, it may be possible to connect at least a part of the dental scanning system to a handheld device 920 and thereby enable transferring of relevant information to the patient. The relevant information may comprise information on any dental plaque parameter associated with the patient's dental situation. In this way, engagement with the patient or any other entity using the analyzed scan data beyond the dental clinic may be enabled.

It is to be understood that embodiments may be made, other than those mentioned, and structural and functional modifications may be made without departing from the scope of the present invention.

It should be appreciated that reference throughout this specification to "one embodiment" or "an embodiment" or "an aspect" or features included as "may" means that a particular feature, structure or characteristic described in connection with the embodiments is included in at least one embodiment of the disclosure. Furthermore, the particular features, structures or characteristics may be combined as suitable in one or more embodiments of the disclosure. The previous description is provided to enable any person skilled in the art to practice the various aspects described herein. Various modifications to these aspects will be readily apparent to those skilled in the art, and the generic principles defined herein may be applied to other aspects.

## Claims

1. A computer-implemented method for detecting dental plaque on a digital 3D model (101) of a dental situation, the method comprising:
- receiving, by a processor, the digital 3D model (101) of the dental situation;
- providing at least a part of the digital 3D model (101) as an input (601) to a trained neural network (600), wherein the at least part of the digital 3D model (101) comprises natural color information and/or geometric information associated with at least one tooth surface of the dental situation, wherein the geometric information comprises a curvature information, a facet normal information, a depth information relating to a virtual camera position and/or an angle between a facet normal and a virtual camera direction;
- obtaining an output (605) from the trained neural network (600) based on the provided input (601), wherein the output (605) comprises a dental plaque parameter associated with the at least one tooth surface;
- assigning the dental plaque parameter to the at least part of the digital 3D model (101);
- displaying the digital 3D model (101) with the dental plaque parameter assigned to the at least part of the digital 3D model (101) .

2. The method according to claim 1, wherein providing the at least part of the digital 3D model (101) to the trained neural network (600) comprises generating one or more 2D images of the at least one tooth surface.

3. The method according to any previous claim, wherein the dental plaque parameter is a plaque presence value.

4. The method according to any previous claim 1-2, wherein the dental plaque parameter is a plaque thickness value.

5. The method according to any previous claim 1-2, wherein the dental plaque parameter is a plaque type.

6. The method according to any previous claim, wherein the at least part of the digital 3D model (101) further comprises fluorescence information associated with at least one tooth surface of the dental situation, wherein the fluorescence information comprises a red (R) fluorescence signal value and a green (G) fluorescence signal value.

7. The method according to the previous claim 6, further comprising determining, based on a function of the red (R) fluorescence signal value and the green (G) fluorescence signal value, that the plaque present on the at least one the tooth surface is pathogenic plaque.

8. The method according to the previous claim 7, wherein the function of the red (R) fluorescence signal value and the green (G) fluorescence signal value is a difference between the red (R) fluorescence signal value and the green (G) fluorescence signal value.

9. The method according to any previous claim, further comprising determining a first number of tooth surfaces in the at least part of the digital 3D model (101) comprising plaque, determining a second number of tooth surfaces in the at least part of the digital 3D model (101) without plaque, and determining a ratio of the first number of tooth surfaces to a sum of the first and second number of tooth surfaces.

10. The method according to any previous claim, further comprising assigning a score to each tooth surface of a tooth in the at least part of the digital 3D model (101) and obtaining a total score by dividing a sum of all scores with a number of tooth surfaces of the tooth.

11. The method according to the previous claim 10, wherein the score assigned to each tooth surface corresponds to plaque density and/or plaque thickness of the each tooth surface.

12. The method according to any previous claim, further comprising:
- receiving, by the processor, the further digital 3D model (503) of the dental situation representing the dental situation captured by an intraoral scanner (825) at a later time point compared to the digital 3D model (101);
- providing at least a part of the further digital 3D model (503) as a further input to the trained neural network (600), wherein the at least part of the further digital 3D model (503) comprises natural color information and/or geometric information associated with the at least one tooth surface of the dental situation;
- obtaining a further output from the trained neural network (600) based on the provided further input, wherein the further output comprises a further dental plaque parameter associated with the at least one tooth surface;
- assigning the further dental plaque parameter to the at least part of the further digital 3D model (503); and
- displaying the further digital 3D model (503) with the further dental plaque parameter assigned to the at least part of the further digital 3D model (503).

13. The method according to the previous claim 12, wherein displaying the further digital 3D model (503) comprises displaying simultaneously the dental plaque parameter and the further dental plaque parameter.

14. The method according to the previous claim 13, wherein displaying simultaneously the dental plaque parameter and the further dental plaque parameter comprises displaying a superimposed digital 3D model (504), wherein the superimposed digital 3D model (504) is obtained by geometrically aligning the digital 3D model (101) and the further digital 3D model (503) of the dental situation.

15. A computer-implemented method for training a neural network for detecting dental plaque of any of the claims 1-14, the method comprising:
- obtaining a training data for the neural network, the training data comprising a first training digital 3D model of a dental situation with plaque present, and a second training digital 3D model of the dental situation with plaque removed;
- generating target data by geometrically subtracting the second training digital 3D model of the dental situation from the first training digital 3D model of the dental situation to obtain a 3D layer of plaque;
- inputting the first training digital 3D model of the dental situation into the neural network to obtain an output from the neural network;
- comparing the output from the neural network to the generated target data to obtain a loss;
- adjusting weights of the neural network based on the obtained loss; and
- repeating the inputting step until the loss satisfies a stopping criterion.
